# EUROPEAN PATENT SPECIFICATION

(11) **EP 4 348 685 B1**
(45) Date of publication and mention of the grant of the patent: **29.01.2025**
(21) Application number: 22734219.3
(22) Date of filing: 02.06.2022
(51) Int. Cl.: G21C 3/32, G21C 3/33, G21C 3/334

(54) **BOTTOM NOZZLE AND NUCLEAR FUEL ASSEMBLY COMPRISING SUCH A BOTTOM NOZZLE**
BODENDÜSE UND KERNBRENNSTABBÜNDEL MIT EINER SOLCHEN BODENDÜSE
BUSE INFÉRIEURE ET ENSEMBLE DE COMBUSTIBLE NUCLÉAIRE COMPRENANT UNE TELLE BUSE INFÉRIEURE

(30) Priority: 03.06.2021 EP 21305746
(43) Date of publication of application: 10.04.2024
(73) Proprietor: FRAMATOME, 92400 Courbevoie (FR)
(72) Inventor: BEN AISSA, Mhamed, 69003 Lyon (FR); BLANC, Pascal, 90408 Nürnberg (DE); MESSINGSCHLAGER, Marco, 91346 Wiesenttal (DE)
(74) Representative: Lavoix
(86) International application number: PCT/EP2022/065092
(87) International publication number: WO 2022/253973

(56) References cited:
- EP-A1- 0 487 371
- US-A- 4 684 495
- US-A- 5 219 517

## Description

The present invention relates to bottom nozzles for nuclear fuel assemblies.

A nuclear fuel assembly (or "fuel assembly"), such as ones designed for VVER reactors (acronym for Russian "Vodo-Vodianoï Energuetitcheski Reaktor"), comprises a skeleton supporting nuclear fuel rods (or "fuel rods") arranged in an organized hexagonal array.

Each fuel rod comprises a tubular cladding containing nuclear fuel (e.g. nuclear fuel pellets, in particular UO₂ pellets), the two ends of the tubular cladding being closed by respective end plugs.

The skeleton comprises a bottom nozzle and a top nozzle spaced along the assembly axis, a plurality of guide tubes along the assembly axis connecting the bottom nozzle and the top nozzle together, spacer grids spaced longitudinally and secured to the guide tubes, and one instrumentation tube.

The fuel rods extend between the bottom nozzle and the top nozzle by passing through the spacer grids. The function of the spacer grids is to support the fuel rods along the assembly axis in an organized hexagonal array.

In operation, the fuel assembly is inserted into a reactor core received into a reactor vessel, with the longitudinal axis of the fuel assembly extending substantially vertically, and a coolant flows vertically through the fuel assembly in order to moderate the nuclear reaction retrieve heat produced by the fuel rods.

Small debris such a metallic chips may be created during maintenance operations, and such debris may be transported in the coolant flow and consequently damage the fuel rods of the fuel assembly, e.g. by generating fretting wear.

The provision of a debris filter in the bottom nozzle increases the complexity of the nuclear fuel assembly and its manufacturing cost, and may also increase pressure drop in the coolant flow.

US4684495A, US5219517A and EP0487371A1 disclose bottom nozzles for nuclear fuel assemblies.

One of the aims of the invention is to provide a bottom nozzle that ensures a good resistance to fretting due to debris with providing easy of maintenance.

To this end, the invention proposes a bottom nozzle as defined in claim 1.

Optional features of the bottom nozzle are defined in claims 2 - 14.

The invention also pertains to a nuclear fuel assembly as defined in claim 15.

The invention and its advantages will be better understood upon reading the following description, given solely by way of non-limiting example and with reference to the appended drawings, on which:
- Figure 1 is a side elevation view of a nuclear fuel assembly, for use e.g. with a VVER, comprising a bottom nozzle;
- Figure 2 is a cross-sectional view of the bottom nozzle;
- Figure 3 is an enlarged view of zone III on Figure 2.

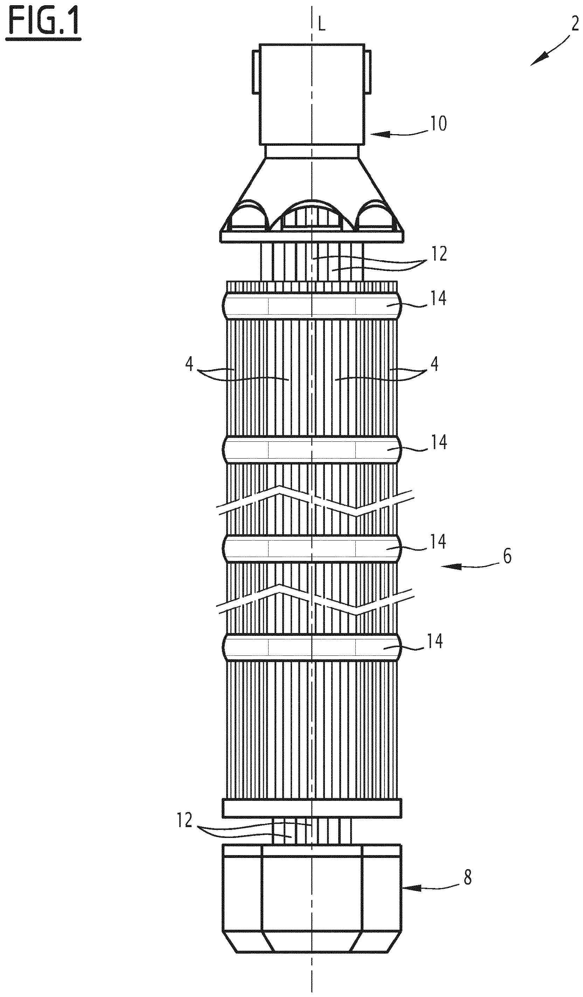

The nuclear fuel assembly 2 of Figure 1 is positioned along an assembly axis L. In operation, the nuclear fuel assembly 2 is inserted in a reactor core with the assembly axis L being vertical.

In the following, the terms "upper", "lower", "bottom", "top", "longitudinal" and "transversal" refer to the position of the nuclear fuel assembly in operation, with the assembly axis L being longitudinal and vertical.

The nuclear fuel assembly 2 comprises a bundle of nuclear fuel rods 4 supported by a skeleton 6. The fuel rods 4 are parallel to each other and to the assembly axis L.

The skeleton 6 comprises a bottom nozzle 8 and a top nozzle 10 spaced along the assembly axis L.

The skeleton 6 comprises guide tubes 12 connecting the bottom nozzle 8 to the top nozzle 10 with maintaining a predetermined spacing along assembly axis L between the bottom nozzle 8 and the top nozzle 10. The guide tubes 12 are parallel to the assembly axis L. The fuel rods 4 are positioned between the bottom nozzle 8 and the top nozzle 10.

The skeleton 6 comprises a plurality of spacer grids 14 distributed along the guide tubes 12 and fixedly attached to the guide tubes 12. The fuel rods 4 extend through the spaced grids 14. Each spacer grid 14 is configured for supporting the fuel rods 4 along the assembly axis L and transversely to the assembly axis L.

Each spacer grid 14 is configured for supporting the fuel rods 4 in a transversely spaced relationship.

In one exemplary embodiment, the fuel rods 4 are maintained transversely at the nodes of an imaginary hexagonal network. In such case, in a plane perpendicular to the assembly axis L, the bundle formed by the fuel rods 4 has for example a hexagonal contour. The guide tubes 12 are positioned at some of the nodes of the imaginary hexagonal network.

The nuclear fuel assembly 2 is for example designed for a VVER (acronym for Russian "Vodo-Vodianoï Energuetitcheski Reaktor"). The nuclear fuel assemblies 2 for VVER generally have fuel rods 4 arranged in a hexagonal array.

In operation, the nuclear fuel assembly 2 is inserted in a reactor core housed inside a reactor vessel, between a lower core plate and an upper core plate, with the assembly axis L being vertical.

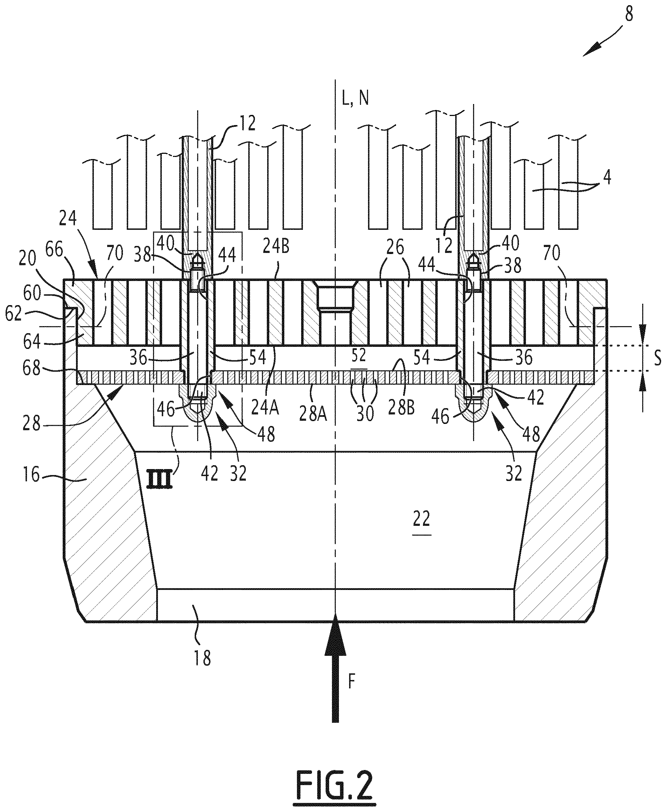

The bottom nozzle 8 is configured to rest onto the lower core plate containing a flow opening that allows a coolant entering the bottom nozzle 8 and flowing upwardly through the nuclear fuel assembly 2 in order to moderate the nuclear reaction and retrieve heat from the fuel rods 4 (see arrow F on Figure 2).

As illustrated on Figure 2, the bottom nozzle 8 comprises a tubular nozzle body 16 extending along a nozzle axis N, having a lower opening 18 and an upper opening 20. In use the nozzle axis N is substantially collinear with the assembly axis L.

The lower opening 18 is configured for being positioned in register with a flow opening in the lower core plate, consequently receiving the coolant flow (see arrow F on Figure 2).

The nozzle body 16 defines an internal duct 22 extending along the nozzle axis N from the lower opening 18 to the upper opening 20 for allowing coolant to flow through the nozzle body 16, from the lower opening 18 to the upper opening 20.

The bottom nozzle 8 comprises a lower tie plate 24 extending across the upper opening 20. The lower tie plate 24 is fixedly attached to the nozzle body 16 and configured for fixing the guide tubes 12 to the lower tie plate 24.

The lower tie plate 24 has a lower face 24A and a top face 24B.

The lower tie plate 24 is configured to allow coolant to flow through the lower tie plate 24. The lower tie plate 24 has for example a plurality of flow apertures 26 extending through the lower tie plate 24 allowing the coolant to flow through the lower tie plate 24.

The bottom nozzle 8 comprises a debris filter 28 received inside the nozzle body 16, below the lower tie plate 24. The debris filter 28 is located axially between the lower tie plate 24 and the lower opening 18 of the bottom nozzle 8. The debris filter 28 is upstream the lower tie plate 24 when considering the coolant flow.

The debris filter 28 has a lower face 28A and an upper face 28B.

The debris filter 28 is configured for allowing coolant to flow through the debris filter 28 whilst retaining debris that may be present in the coolant.

The debris filter 28 comprises flow passages 30 for allowing coolant to flow through the debris filter 28. Each flow passage 30 extends from the lower face 28A to the upper face 28B of the debris filter 28.

The debris filter 28 comprises for example flow passages 30 that exhibit small transverse dimensions retaining debris having transverse dimensions larger and/or higher than that of the flow passages 30.

The debris filter 28 comprises flow passages 30 extending axially. Alternatively or optionally, the debris filter 28 comprises tortuous flow passages 30. Such flow passages 30 are adapted for retaining elongated debris.

The bottom nozzle 8 comprises connection members 32, each connection member 32 being configured for securing a lower end of a respective guide tube 12 of the nuclear fuel assembly 2 to the lower tie plate 24. Each connection member 32 is preferably configured for securing the guide tube 12 axially and transversely to the lower tie plate 24.

Each connection member 32 is configured to be operable from below the debris filter 28 for attaching the guide tube 12 to the lower tie plate 24 and/or detaching the guide tube 12 from the lower tie plate 24.

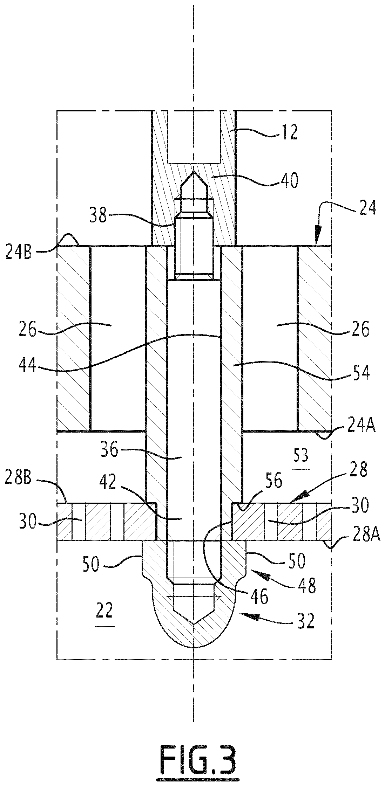

As may be seen on Figure 3, each connection member 32 comprises for example a connection rod 36 extending through the lower tie plate 24 and the debris filter 28, the connection rod 36 having an upper end 38 configured to be connected to a lower end 40 of a guide tube 12 and a lower end 42.

More specifically, the connection rod 36 passes through a connection orifice 44 of the lower tie plate 24 and through a corresponding connection orifice 46 of the debris filter 28.

The upper end 38 of the connection rod 36 is for example configured for screwing the connection rod 36 to the lower end 40 of the guide tube 12.

The upper end 38 of the connection rod 36 is for example threaded for screwing the lower end 40 to the guide tube 12 that is provided with a thread that is complementary to that of the upper end 38 of the connection rod 36. The upper end 38 of the connection rod 36 is for example externally threaded, the lower end 40 of the guide tube 12 being internally threaded.

The lower end 42 of the connection rod 36 is provided with a connection head 48 that is configured for holding the connection rod 36 under the lower tie plate 24.

In one example, the connection head 48 is screwed to the connection rod 36. Alternatively, the connection head 48 is integrated to the connection rod 36. In such case, the connection head 48 is not detachable from the connection rod 36. In a particular example, the connection head 48 and the connection rod 36 may be welded together or made in one single piece of material.

Advantageously, the connection head 48 is configured for operating the connection rod 36 and therefore attaching the guide tube 12 to the lower tie plate 24 and/or detaching the guide tube 12 from the lower tie plate 24.

The connection head 48 is for example configured for turning the connection rod 36, e.g. for screwing the connection rod 36 to the lower end 40 of the guide tube 12 and/or unscrewing the connection rod 36 from the lower end 40 of the guide tube 12.

Screwing / unscrewing the connection rod 36 is operated from the underside of the lower tie plate 24, through the lower opening 18of the nozzle body 16.

The connection head 48 is for example provided with facets 50 for cooperating with a tool such as a wrench. In a particular example, the connection head 48 may have a hexagonal outer shape.

Advantageously, each connection member 32 is configured for assembling the debris filter 28 to the underside of the lower tie plate 24.

In one example, the connection head 48 is configured for retaining the debris filter 28 by interfering with the periphery of the connection orifice 46 on the lower face 28A of the debris filter 28.

Advantageously, the bottom nozzle 8 is configured for maintaining an axial spacing S between the debris filter 28 and the lower tie plate 24.

Due to the axial spacing S, an intermediate space 52 is maintained between the debris filter 28 and the lower tie plate 24, more specifically between the upper face 28B of the debris filter 28 and the lower face 24A of the lower tie plate 24.

The spacing S provided between the lower tie plate 24 and the debris filter 28 allows a flexible design of the debris filter 28 without penalizing the pressure loss coefficient of the bottom nozzle 8. Indeed, the geometry of the debris filter 28 does not have to be congruent with the lower tie plate 24. The debris filter 28 may e.g. have an offset with regard to the lower tie plate 24.

The bottom nozzle 8 is thus modular with the possibility to associate different debris filters 28 to a same lower tie plate 24, in particular with different debris filter 28 imparting different pressure loss coefficient to the bottom nozzle 8.

In the bottom nozzle 8, a debris filter 28 may be easily replaced by another one that is identical or different during maintenance operations.

In one example, the bottom nozzle 8 comprises columns 54 extending between the the lower face 24A of the lower tie plate 24 and the debris filter 28, each column 54 being configured such as to maintain the spacing S between the lower tie plate 24 and the debris filter 28.

Preferably, each connection orifice 44 of the lower tie plate 24 extends through a respective column 54 that is thus tubular. Each connection rod 36 extends through a respective tubular column 54.

In one example, the outer surface of each column 54 is provided with a stop surface 56 located at a distance from the lower face 24B of the lower plate 24 and configured to stop an upward movement of debris filter 28 along the column 54.

The spacing S between the lower corresponds to the length of each column 54 between the lower face 24A of the lower tie plate 24 and the stop surface 56.

Preferably, the stop surface 56 of each column 54 is located at a distance above the lower extremity of the column 54. Each column 54 has a lower portion extending through a connection orifice 46 of the debris filter 28 with the stop surface 56 abutting the upper face 28B of debris filter 28 when the debris filter 28 moves upwardly.

The debris filter 28 is retained axially between the connection head 48 of each connection member 32 and the stop surface 56 of the corresponding column 54.

Preferably, the bottom nozzle 8 is configured for securing each connection member 32 to a guide tube 12 thought the lower tie plate 24 without clamping the debris filter 28 against the lower tie plate 24.

To that end, the connection head 48 of each connection member 32 abuts for example the lower extremity of the corresponding column 54 without clamping the debris filter 28.

Optionally, the connection head 48 of each connection member 32 is hydrodynamically profiled to limit pressure losses of the coolant. In one example, the connection head 48 tapers downwardly. Preferably, the connection head 48 is ogive shaped.

Each column protrudes from the lower face 24B of the lower tie plate 24.

Preferably, each column 54 is integral with the lower tie plate 24. In particular, each column 54 is preferably made in one piece of material with the lower tie plate 24. Alternatively, each column 54 is fixedly secured to the lower tie plate 24, e.g. by welding.

As visible on Figure 2, in one example, the lower tie plate 24 is positioned across the upper opening 20 of the nozzle body 16 with abutting a peripheral edge 60 of the upper opening 20.

For example, the lower tie plate 24 has a peripheral shoulder 62 abutting the peripheral edge 60.

The peripheral shoulder 62 is located at a junction between a lower portion 64 and an upper portion 66 of the lower tie plate 24, the lower portion 64 being nested into the upper opening 20.

The upper opening 20 and the debris filter 28 are configured for insertion of the debris filter 28 into the nozzle body 16 from the top of the nozzle body 16, through the upper opening 20.

In one example, the nozzle body 16 is provided inside the nozzle body 16 with a stop feature 68 configured for stopping the downward movement of the debris filter 28 inserted inside the nozzle body 16 through the upper opening 20.

In one exemplary embodiment, the stop feature 68 is an internal peripheral shoulder provided on an inner surface of the nozzle body 16.

Preferably, each connection member 32 is positioned such as to be operable through the lower opening 18 of the nozzle body 16.

In one exemplary embodiment, each connection member 32 is positioned in such a way that the connection member 32, and in particular the connection head 48, is axially in register with the lower opening 18 of the nozzle body 16 along the nozzle axis N.

Preferably, each connection member 32, and in particular the connection head 48 of each connection member 32, is located within an imaginary cylinder C formed by projecting the contour of the lower opening 18 along the nozzle axis N.

The contour of the lower opening 18 is preferably circular in a plane perpendicular to the nozzle axis N.

Preferably, the lower tie plate 24 is to be secured to the nozzle body 16.

To this end, the bottom nozzle 8 comprises for example connection elements 70 (diagrammatically represented by mixed lines), which are e.g. screws.

In view of assembling the bottom nozzle 8, the debris filter 28 is inserted inside the nozzle body 16 through the upper opening 18

Then the lower tie plate 24 is positioned across the upper opening 18, with optionally inserting the lower portion 64 of the lower tie plate 24 into the upper opening 18 and the lower tie plate 24 is secured to the nozzle body 16, e.g. via the connection elements 70.

Then, the connection members 32 are inserted into the nozzle body 16 through the lower opening 18 and operated from below the nozzle body 16 to be connected to the lower ends 40 of the guide tubes 12 through the debris filter 28 and the lower tie plate 24.

Once the connection members 32 are secured to the guide tubes 12, the guide tubes 12 are fixedly secured to the lower tie plate 24, and preferably, the debris filter 28 is also secured to the lower tie plate 24, advantageously with a spacing S between the debris filter 28 and the lower tie plate 24.

In view of disassembling the bottom nozzle 8, the connection members 32 are operated through the lower opening 18 of the bottom nozzle 16 such as to unsecure the guide tubes 12 from the lower tie plate 24.

Before securing the connection members 32 to the tube guides 12, the connection members 32 may be temporarily secured to the lower tie plate 24 using nuts screwed onto the upper ends 38 of the connection rods 36 of the connection members 32 inserted through the lower tie plate 24.

Such a temporary mounting may be useful for transporting the bottom nozzle 8 in an assembled stated before securing to the guide tubes 12.

Owing to the invention, it is possible to obtain a bottom nozzle 8 for a nuclear fuel assembly 2 that can be secured easily to the lower ends of the guide tubes 12 of the nuclear fuel assembly 2.

The assembly/disassembly is performed easily through the lower opening 18 of the nozzle body 16.

In addition, the bottom nozzle 8 is provided with a debris filter 28 inside the nozzle body 16, below the lower tie plate 24. This reduces the risk of debris reaching the fuel rods 4 and thus limits the risk of fretting wear of the fuel rods 4 due to debris.

The optional spacing S between the debris filter 28 and the lower tie plate 24 allows providing a debris filter 28 with a specific design that is more freely adaptable, in terms of filtering performances and/or pressure loss coefficient for the coolant flowing through the bottom nozzle 8.

The optional spacing S is obtained in a simple manner, with combining the connection of the lower tie plate 24 to the guide tubes 12 using connection members 32 extending through the debris filter 28 and the lower tie plate 24 and the spacing S of the lower tie plate 24 and the debris filter 28 thanks to the columns 54.

The invention is not limited to the exemplary embodiments that have been described above. Other embodiments may be contemplated.

In one exemplary embodiment above, the debris filter 28 is secured to the lower tie plate 24 by the connection members 32, in particular by the connection head 48 interfering with the debris filter 28.

Alternatively, debris filter 28 is maintained between the lower tie plate 24 and the stop feature 68, in particular between the stop surfaces 56 of the columns 54 and the strop feature 68, when a spacing S is provided between the lower tie plate 24 and the debris filter 28.

In such a case, the stop feature 68 is preferably positioned axially relative to the lower tie plate 24 in such a way that the debris filter 28 is held between the stop feature 68 and the columns 54, advantageously with a small or no axial play.

Besides, the invention is applicable to a nuclear fuel assembly 2 in which the nuclear fuel rods 4 are arranged at the nods of an imaginary hexagonal network, in particular by forming a bundle of fuel rods 4 with a hexagonal contour.

The invention also applies to a nuclear fuel assembly 2 in which the nuclear fuel rods 4 are arranged at the nods of an imaginary square network, in particular by forming a bundle of fuel rods 4 with a square contour.

Besides, the invention is not limited to a nuclear fuel assembly 2 designed for a VVER but also apply to nuclear fuel assemblies designed for other nuclear reactors, such as Pressurized Water reactors (PWRs) and Boiling Water Reactors (BWRs).

## Claims

1. Bottom nozzle for a nuclear fuel assembly, the bottom nozzle comprising a tubular nozzle body (16) having a lower opening (18) and an upper opening (20), a lower tie plate (24) extending across the upper opening (20) and connection members (32), each connection member (32) being configured for securing a lower end of a respective guide tube (12) of the nuclear fuel assembly to the lower tie plate (24), wherein the bottom nozzle comprises a debris filter (28),
each connection member (32) being operable from below the debris filter (28) for attaching the guide tube (12) to the lower tie plate (24) and detaching the guide tube (12) from the lower tie plate (24),
**characterised in that**
the debris filter (28) is received inside the nozzle body (16) below the lower tie plate (24).

2. Bottom nozzle according to claim 1, wherein each connection member (32) comprises a connection rod (36) extending through a connection orifice (44) of the lower tie plate (24), the connection rod (36) having an upper end (38) configured to be connected to a lower end of a guide tube (12) and a lower end (42) provided with a connection head (48) that is configured for holding the connection rod (36) under the lower tie plate (24).

3. Bottom nozzle according to claim 2, wherein the connection head (48) is configured for operating the connection rod (36) by attaching the connection rod (36) to the guide tube (12) and/or detaching the connection rod (36) from the guide tube (12).

4. Bottom nozzle according to claim 2 or claim 3, wherein the connection rod (36) passes through a connection orifice (46) of the debris filter (28), the connection head (48) being located below the debris filter (28).

5. Bottom nozzle according to any one of the preceding claims, wherein each connection member (32) is configured for assembling the debris filter (28) to the lower tie plate (24).

6. Bottom nozzle according to any one of the preceding claims, configured for maintaining an axial spacing (S) between the debris filter (28) and the lower tie plate (24).

7. Bottom nozzle according to any one of the preceding claims, comprising columns (54) extending between the lower face (24A) of the lower tie plate (24) and the debris filter (28).

8. Bottom nozzle according to claim 7, wherein each column (54) is tubular, the connection rod (36) of each connection member (32) extending through a respective column (54).

9. Bottom nozzle according to claim 8, wherein each connection member (32) abuts against the lower extremity of the column (54).

10. Bottom nozzle according to any one of claims 7 - 9, wherein each column (54) is configured for maintaining an axial spacing (S) between the lower tie plate (24) and the debris filter (28).

11. Bottom nozzle according to claim 10, wherein each column (54) is provided with a stop surface (56) located at a certain distance from the lower end of the column (54) and configured to stop an upward movement of debris filter (28) along the column (54).

12. Bottom nozzle according to any one of the preceding claims, wherein the nozzle body (16) and the debris filter (28) are configured for insertion of the debris filter (28) from the top of the nozzle body (16), through the upper opening (20).

13. Bottom nozzle according to claim 12, wherein the nozzle body (16) is provided inside the nozzle body (16) with a stop feature (68) configured for stopping the downward movement of the debris filter (28) upon insertion thereof into the nozzle body (16) through the upper opening (20).

14. Bottom nozzle according to any one of the preceding claims, wherein each connection member (32) is positioned to be in register with the lower opening (18) of the nozzle body (16) such as to be operable through the lower opening (18).

15. Nuclear fuel assembly comprising a bundle of nuclear fuel rods (4) and a skeleton (6) supporting the fuel rods (4), the skeleton (6) comprising a bottom nozzle (8) as in any of the preceding claims, a top nozzle (10), a plurality of guide tubes (12) connecting the bottom nozzle (8) to the top nozzle (10) with maintaining a predetermined spacing, and a plurality of spacer grids (14) attached along the guide tubes (12), the fuel rods (4) extending through the spaced grid (14), each connection member (32) of the bottom nozzle (8) connecting the lower end of a respective guide tube (12) to the lower tie plate (24) the bottom nozzle (8).

## Patentansprüche

1. Bodendüse für ein Kernbrennstoffbündel, die Bodendüse umfassend einen rohrförmigen Düsenkörper (16), der eine untere Öffnung (18) und eine obere Öffnung (20) aufweist, eine untere Brennelementkopfplatte (24), die sich über die obere Öffnung (20) erstreckt, und Verbindungselemente (32), wobei jedes Verbindungselement (32) konfiguriert ist, um ein unteres Ende eines entsprechenden Führungsrohrs (12) des Kernbrennstoffbündels an der unteren Brennelementkopfplatte (24) zu befestigen, wobei die untere Düse einen Schmutzfilter (28) umfasst, wobei jedes Verbindungselement (32) von unterhalb des Schmutzfilters (28) betätigbar ist, um das Führungsrohr (12) an der unteren Brennelementkopfplatte (24) anzubringen und das Führungsrohr (12) von der unteren Brennelementkopfplatte (24) zu lösen,
**dadurch gekennzeichnet, dass** der Schmutzfilter (28) im Inneren des Düsenkörpers (16) unterhalb der unteren Brennelementkopfplatte (24) aufgenommen ist.

2. Bodendüse nach Anspruch 1, wobei jedes Verbindungselement (32) eine Verbindungsstange (36) umfasst, die sich durch eine Verbindungsöffnung (44) der unteren Brennelementkopfplatte (24) erstreckt, wobei die Verbindungsstange (36) ein oberes Ende (38), das konfiguriert ist, um mit einem unteren Ende eines Führungsrohrs (12) verbunden zu sein, und ein unteres Ende (42), das mit einem Verbindungskopf (48) versehen ist, der konfiguriert ist, um die Verbindungsstange (36) unter der unteren Brennelementkopfplatte (24) zu halten, aufweist.

3. Bodendüse nach Anspruch 2, wobei der Verbindungskopf (48) zum Betätigen der Verbindungsstange (36) durch Anbringen der Verbindungsstange (36) an dem Führungsrohr (12) und/oder Lösen der Verbindungsstange (36) von dem Führungsrohr (12) konfiguriert ist.

4. Bodendüse nach Anspruch 2 oder 3, wobei die Verbindungsstange (36) durch eine Verbindungsöffnung (46) des Schmutzfilters (28) verläuft und sich der Verbindungskopf (48) unterhalb des Schmutzfilters (28) befindet.

5. Bodendüse nach einem der vorherigen Ansprüche, wobei jedes Verbindungselement (32) zum Montieren des Schmutzfilters (28) an der unteren Brennelementkopfplatte (24) konfiguriert ist.

6. Bodendüse nach einem der vorherigen Ansprüche, die konfiguriert ist, um einen axialen Abstand (S) zwischen dem Schmutzfilter (28) und der unteren Brennelementkopfplatte (24) beizubehalten.

7. Bodendüse nach einem der vorherigen Ansprüche, umfassend Säulen (54), die sich zwischen der Unterseite (24A) der unteren Brennelementkopfplatte (24) und dem Schmutzfilter (28) erstrecken.

8. Bodendüse nach Anspruch 7, wobei jede Säule (54) rohrförmig ist und sich die Verbindungsstange (36) von jedem Verbindungselement (32) durch eine entsprechende Säule (54) erstreckt.

9. Bodendüse nach Anspruch 8, wobei jedes Verbindungselement (32) an dem unteren Ende der Säule (54) anliegt.

10. Bodendüse nach einem der Ansprüche 7 bis 9, wobei jede Säule (54) zum Beibehalten eines axialen Abstands (S) zwischen der unteren Brennelementkopfplatte (24) und dem Schmutzfilter (28) konfiguriert ist.

11. Bodendüse nach Anspruch 10, wobei jede Säule (54) mit einer Anschlagfläche (56) versehen ist, die sich in einem gewissen Abstand von dem unteren Ende der Säule (54) befindet und konfiguriert ist, um eine Aufwärtsbewegung des Schmutzfilters (28) entlang der Säule (54) zu stoppen.

12. Bodendüse nach einem der vorherigen Ansprüche, wobei der Düsenkörper (16) und der Schmutzfilter (28) zum Einsetzen des Schmutzfilters (28) von der Oberseite des Düsenkörpers (16) durch die obere Öffnung (20) konfiguriert sind.

13. Bodendüse nach Anspruch 12, wobei der Düsenkörper (16) im Inneren des Düsenkörpers (16) mit einem Anschlagmerkmal (68) versehen ist, der konfiguriert ist, um die Abwärtsbewegung des Schmutzfilters (28) bei dessen Einsetzen in den Düsenkörper (16) durch die obere Öffnung (20) zu stoppen.

14. Bodendüse nach einem der vorherigen Ansprüche, wobei jedes Verbindungselement (32) positioniert ist, um mit der unteren Öffnung (18) des Düsenkörpers (16) ausgerichtet zu sein, um durch die untere Öffnung (18) betätigbar zu sein.

15. Kernbrennstabbündel, umfassend ein Bündel von Kernbrennstäben (4) und ein Gerüst (6) das die Brennstäbe (4) trägt, das Gerüst (6) umfassend eine Bodendüse (8) nach einem der vorherigen Ansprüche, eine obere Düse (10), eine Vielzahl von Führungsrohren (12), die die Bodendüse (8) mit der oberen Düse (10) unter Beibehaltung eines vorbestimmten Abstands verbinden und eine Vielzahl von Abstandsgittern (14), die entlang der Führungsrohre (12) angebracht sind, wobei sich die Brennstäbe (4) durch das Abstandsgitter (14) erstrecken, wobei jedes Verbindungselement (32) der Bodendüse (8) das untere Ende eines jeweiligen Führungsrohrs (12) mit der unteren Brennelementkopfplatte (24) der Bodendüse (8) verbindet.

## Revendications

1. Buse inférieure destinée à un ensemble de combustible nucléaire, la buse inférieure comprenant un corps de buse tubulaire (16) ayant une ouverture inférieure (18) et une ouverture supérieure (20), une contre-plaque de serrage inférieure (24) s'étendant sur l'ouverture supérieure (20) et des éléments de raccordement (32), chaque élément de raccordement (32) étant configuré pour fixer une extrémité inférieure d'un tube de guidage respectif (12) de l'ensemble de combustible nucléaire sur la contre-plaque de serrage inférieure (24), dans laquelle la buse inférieure comprend un filtre à débris (28), chaque élément de raccordement (32) étant utilisable depuis le dessous du filtre à débris (28) afin de fixer le tube de guidage (12) sur la contre-plaque de serrage inférieure (24) et de détacher le tube de guidage (12) de la contre-plaque de serrage inférieure (24), **caractérisée en ce que**
le filtre à débris (28) est reçu à l'intérieur du corps de buse (16) en-dessous de la contre-plaque de serrage (24).

2. Buse inférieure selon la revendication 1, dans laquelle chaque élément de raccordement (32) comprend une tige de raccordement (36) s'étendant à travers un orifice de raccordement (44) de la contre-plaque de serrage inférieure (24), la tige de raccordement (36) ayant une extrémité supérieure (38) configurée pour être reliée à une extrémité inférieure d'un tube de guidage (12) et une extrémité inférieure (42) équipée d'une tête de raccordement (48) qui est configurée pour maintenir la tige de raccordement (36) sous la contre-plaque de serrage inférieure (24).

3. Buse inférieure selon la revendication 2, dans laquelle la tête de raccordement (48) est configurée pour commander la tige de raccordement (36) en fixant la tige de raccordement (36) sur le tube de guidage (12) et/ou en détachant la tige de raccordement (36) du tube de guidage (12).

4. Buse inférieure selon la revendication 2 ou la revendication 3, dans laquelle la tige de raccordement (36) passe par un orifice de raccordement (46) du filtre à débris (28), la tête de raccordement (48) étant située en-dessous du filtre à débris (28).

5. Buse inférieure selon l'une quelconque des revendications précédentes, dans laquelle chaque élément de raccordement (32) est configuré pour assembler le filtre à débris (28) sur la contre-plaque de serrage inférieure (24).

6. Buse inférieure selon l'une quelconque des revendications précédentes, configurée pour maintenir un espacement axial (S) entre le filtre à débris (28) et la contre-plaque de serrage inférieure (24).

7. Buse inférieure selon l'une quelconque des revendications précédentes, comprenant des colonnes (54) s'étendant entre la face inférieure (24A) de la contre-plaque de serrage inférieure (24) et le filtre à débris (28).

8. Buse inférieure selon la revendication 7, dans laquelle chaque colonne (54) est tubulaire, la tige de raccordement (36) de chaque élément de raccordement (32) s'étendant à travers une colonne respective (54).

9. Buse inférieure selon la revendication 8, dans laquelle chaque élément de raccordement (32) est en butée contre l'extrémité inférieure de la colonne (54).

10. Buse inférieure selon l'une quelconque des revendications 7 à 9, dans laquelle chaque colonne (54) est configurée pour maintenir un espacement axial (S) entre la contre-plaque de serrage inférieure (24) et le filtre à débris (28).

11. Buse inférieure selon la revendication 10, dans laquelle chaque colonne (54) est équipée d'une surface d'arrêt (56) située à une certaine distance de l'extrémité inférieure de la colonne (54) et configurée pour arrêter un mouvement ascendant du filtre à débris (28) le long de la colonne (54).

12. Buse inférieure selon l'une quelconque des revendications précédentes, dans laquelle le corps de buse (16) et le filtre à débris (28) sont configurés pour l'insertion du filtre à débris (28) depuis le haut du corps de buse (16), par l'ouverture supérieure (20).

13. Buse inférieure selon la revendication 12, dans laquelle le corps de buse (16) est équipé, à l'intérieur du corps de buse (16), d'une butée (68) configurée pour arrêter le mouvement descendant du filtre à débris (28) lors de l'insertion de celui-ci dans le corps de buse (16) par l'ouverture supérieure (20).

14. Buse inférieure selon l'une quelconque des revendications précédentes, dans laquelle chaque élément de raccordement (32) est positionné pour s'aligner avec l'ouverture inférieure (18) du corps de buse (16) de façon à être utilisable par l'ouverture inférieure (18).

15. Ensemble de combustible nucléaire comprenant un faisceau de barres de combustible nucléaire (4) et un squelette (6) supportant les barres de combustible (4), le squelette (6) comprenant une buse inférieure (8) selon l'une quelconque des revendications précédentes, une buse supérieure (10), une pluralité de tubes de guidage (12) reliant la buse inférieure (8) à la buse supérieure (10) en maintenant un espacement prédéterminé, et une pluralité de grilles d'espacement (14) fixées le long des tubes de guidage (12), les barres de combustible (4) s'étendant à travers les grilles d'espacement (14), chaque élément de raccordement (32) de la buse inférieure (8) reliant l'extrémité inférieure d'un tube de guidage respectif (12) à la contre-plaque de serrage inférieure (24) de la buse inférieure (8).
